# EUROPÄISCHE PATENTSCHRIFT

(11) **EP 0 376 013 B1**
(45) Veröffentlichungstag und Bekanntmachung des Hinweises auf die Patenterteilung: **05.05.1993**
(21) Anmeldenummer: 89122569.0
(22) Anmeldetag: 07.12.1989
(51) Int. Cl.: A01C 17/00, A01C 15/00

(54) **Schleuderstreuer für Dünger**
Broadcaster for fertilizers
Epandeur centrifuge pour engrais

(30) Priorität: 14.12.1988 DE 3841974; 03.03.1989 DE 3906776
(43) Veröffentlichungstag der Anmeldung: 04.07.1990
(73) Patentinhaber: RAUCH LANDMASCHINENFABRIK GMBH, D-76545 Sinzheim (DE)
(72) Erfinder: Rauch, Norbert, Dipl.-Ing., D-7573 Sinzheim (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- DE-A- 1 457 879
- FR-A- 2 294 623
- US-A- 3 017 189

## Beschreibung

Die Erfindung betrifft einen Schleuderstreuer für Dünger zum Anbau an einen Schlepper mit einem Tragrahmen, einem von diesem aufgenommenen, quer zur Fahrtrichtung angeordneten Dünger-Behälter mit je einer nahe dessen äußeren seitlichen Enden angeordneten Austragsöffnung und mit je einer unterhalb jeder Austragsöffnung angeordneten Schleuderscheibe, die am Ende eines Schwenkarms mit vertikaler Schwenkachse angeordnet und in einer horizontalen Ebene aus einer Position unterhalb der Austragsöffnung in eine Position neben dieser schwenkbar ist.

Der vorgenannte Düngerstreuer gehört der Gattung der sogenannten Zweischeibenstreuer an, die sich gegenüber den in der Praxis ebenso häufig verwendenten Einscheibenstreuern durch eine größere Arbeitsbreite bei gleichzeitig größerem Fassungsvermögen des Behälters auszeichnen. Während bei dem Einscheibenstreuer der Behälter trichterartig ausgebildet ist, besteht er bei einem Zweischeibenstreuer üblicherweise aus einem einzigen Behälter, der aber etwa ab mittlerer Höhe gleichfalls zwei Trichter bildet, die jeweils auf die Austragsöffnungen oberhalb der Schleuderscheiben zulaufen (DE 33 10 694 A1). Der Austrag des Düngers auf die Schleuderscheiben erfolgt im wesentlichen durch Schwerkraft, wobei in jedem Trichter üblicherweise Rührwerke umlaufen, um den Dünger nahe der Austragsöffnung in Bewegung zu halten und Brückenbildungen zu vermeiden. Bei diesen Düngerstreuern ist es unter anderem bekannt, die Schleuderscheiben mittels eines einzigen Hydraulikmotors anzutreiben, dessen Drehmoment über eine unterhalb des Behälters und der Schleuderscheiben verlaufende Antriebswelle mit je einem Eckgetriebe für jede Schleuderscheibe übertragen wird. Die mechanische Zwangskopplung ist aus folgendem Grund notwendig: Da die Schleuderscheiben relativ nahe beieinander liegen, besteht die Gefahr, daß die nach innen abgeschleuderten Düngerpartikel kollidieren und zu einem ungleichmäßigen Streubild im Überlappungsbereich der von den beiden Schleuderscheiben gebildeten Streufächer führen. Es müssen deshalb die auf den Schleuderscheiben angeordneten Wurfschaufeln gegeneinander versetzt sein, so daß die von den einzelnen Wurfschaufeln auf den beiden Schleuderscheiben abgeschleuderten Düngerstrahlen zeitversetzt in den mittleren Bereich treffen. Dieser konstruktiv vorgegebene Versatz zwischen den Wurfschaufeln auf beiden Schleuderscheiben muß während des Betriebs erhalten bleiben, was durch den gemeinsamen Zwangsantrieb beider Schleuderscheiben geschieht. Zweischeibenstreuer des vorgenannten Aufbaus haben den weiteren Nachteil, daß wegen der Aufteilung des Vorratsbehälters in zwei Trichter zwischen den beiden Trichtern und außerhalb derselben ein Totraum vorhanden ist, so daß Vorrats- bzw. Transportkapazität verloren gehen.

Bei dem aus der US-A-3 017 189 bekanntgewordenen Zweischeibenstreuer, der die Merkmale des Oberbegriffes des Anspruchs 1 aufweist, wird dieser Nachteil dadurch vermieden, daß der Vorratsbehälter kastenförmig ausgebildet ist und sich quer zur Fahrtrichtung erstreckt, wobei die Breite quer zur Fahrtrichtung ein Vielfaches der Breite in Fahrtrichtung beträgt. Diese Ausbildung des Vorratsbehälters erfordert eine eigene Fördereinrichtung innerhalb desselben, um den Dünger zu den im Bereich der äußeren Enden des Behälters liegenden Austragsöffnungen zu transportieren. Dieser Düngerstreuer hat also bei größerem Fassungsvermögen des Vorratsbehälters zugleich eine größere Arbeitsbreite, da die Schleuderscheiben weit außen liegen.

Die an sich erwünschte größere Streubreite wird bei diesem bekannten Schleuderstreuer durch eine Reihe von Nachteilen erkauft. Zunächst handelt es sich um ein relativ schweres Gerät, das als Nachläufer am Schlepper angehängt ist und als Antriebsquelle einen eigenen Verbrennungsmotor, der auf dem Fahrgestell angeordnet ist, aufweist. Der Antrieb beider Schleuderscheiben erfolgt über einen endlosen Riementrieb und mehrere Umlenkrollen. Allein dieser Antrieb ist schon sehr aufwendig und erfordert eine Vielzahl von Bauteilen, die am Fahrgestell zu lagern sind. Um den Dünger quer zu fördern, sind an dem unten offenen Behälter von dessen Mitte aus nach beiden Seiten verlaufende Bodenbleche gelagert, die nach Art von Schwingrutschen die Förderung besorgen. Auch sie sind von dem Verbrennungsmotor über den endlosen Riementrieb angetrieben. In diesen Bodenblechen sind die Austragsöffnungen angeordnet, deren freier Querschnitt durch darunter angeordnete Dosierschieber bestimmt wird. Ferner sind unterhalb der Dosierschieber Verschlußschieber angeordnet, die unabhängig von der Voreinstellung der Dosierschieber einen Verschluß der Austragsöffnungen gestatten. Mittels der Dosierschieber kann auch ein düngerspezifischer Eichvorgang vorgenommen werden. Um diesen zu erleichtern, sind die Schleuderscheiben über Schwenkarme am Fahrgestellrahmen gelagert, so daß sie in einer horizontalen Ebene in eine die Austragsöffnungen freigebende Position verbracht werden können, in der ein Dosiergefäß unter die Austragsöffnung gestellt werden kann. Auf diese Weise läßt sich eine dem jeweiligen Rieselverhalten des Düngers angepaßte spezifische Streumenge pro Zeiteinheit bei einer bestimmten Öffnungsstellung des Dosierschiebers feststellen, die sich wiederum in eine fahrgeschwindigkeitsabhängige Streumenge pro Fläche umrechnen läßt. Auch wird durch das Wegschwenken der Streuscheiben deren Zugänglichkeit, z.B. zum Zweck des Austauschs der Scheiben, sowie die Zugänglichkeit der Austragsöffnungen und der Dosierschieber verbessert.

Der Erfindung liegt die Aufgabe zugrunde, den bekannten Schleuderstreuer als Anbaugerät auszubilden und in antriebstechnischer und sonstiger konstruktiver Hinsicht zu vereinfachen, ohne die Streueigenschaften ungünstig zu verändern.

Diese Aufgabe wir dadurch gelöst, daß der Tragrahmen so ausgebildet ist, daß er mit dem Behälter vom Dreipunktgestänge bes Schleppers aufgenommen werden kann, daß jeder Schwenkarm innerhalb eines im wesentlichen horizontalen Schutzrahmens angeordnet ist, innerhalb dessen der Schwenkarm zwischen den beiden Positionen für die Schleuderscheibe verschwenkbar ist und dessen Unterkante tiefer liegt als der tiefste Punkt des Schwenkarms, während die Schleuderscheibe in einer Ebene oberhalb des Schutzrahmens liegt, und daß jedem Schwenkarm einen ihn wenigstens im Bereich seines äußeren Endes untergreifende Abweiserkufe zugeordnet ist, die mit dem Tragrahmen oder dem Schutzrahmen verbunden ist.

Bei dem erfindungsgemäßen Schleuderstreuer entfällt das aufwendige Fahrgestell und er läßt sich als Anbaugerät an Schleppern mit einem Dreipunktgestänge einsetzen. Als Anbaugeräte ausgebildete Schleuderstreuer müssen sowohl auf dem Hof als auch gelegentlich auf dem Feld abgestellt oder in eine sehr tiefen Position verfahren werden können. Zu diesem Zweck sind am Tragrahmen des Streuers Standkufen angebracht, die den Streuer beim Fahren in einer Tieflage zugleich vor Beschädigung durch Bodenunebenheiten, Steine oder sonstige erhöhte Hindernisse bewahren. Diese Gefahr ist insbesondere dann groß, wenn der Behälter auf dem Feld im Rahmen der sogenannten losen Düngerkette aus einer Kipperpritsche nachgefüllt wird. Einerseits ist mit der Ablaufkante der Pritsche eine bestimmte Höhe über dem Boden vorgegeben, andererseits soll die Bauhöhe des Behälters möglichst groß sein, um ein größtmögliches Fassungsvermögen zu erhalten. Aufgrund der notwenigen Bauteile unterhalb des Behälters, wie Schleuderscheiben, Rahmenteile etc., läßt sich nicht die gesamte Bauhöhe des Streuers für die Bauhöhe des Behälters nutzen. Aus diesem Grund muß der Streuer in einer extremen Tieflage, häufig über den Erdboden rutschend, an die Pritsche herangefahren werden. Um insbesondere hierbei die außerhalb der Standkufen liegenden Schwenkarme vor zu hohen Belastungen oder gar Beschädigungen zu schützen, sind die mit dem Tragrahmen verbundenen Schwenkarme zumindest im äußeren Bereich, wo die größten Momente auftreten könnten, wirksam geschützt. Auch die Schwenklager sind damit vor Beschädigung bewahrt, da eventuelle Stoßkräfte nicht am Schwenkarm wirksam, sondern in den Tragrahmen abgeleitet werden. Damit wird insbesondere auch der Gefahr vorgebeugt, daß durch Verbiegen des Schwenkarms der Aufgabepunkt auf der Streuscheibe und damit das Streubild nachteilig verändert wird.

Durch die Anordnung und Ausbildung des Schutzrahmens ist der Schwenkarm zur Seite hin und nach unten geschützt, und zwar nicht nur in der Betriebsstellung, sondern auch in der die Auslauföffnung freigebenden Stellung, so daß weder beim Fahrbetrieb, noch beim Rangieren und Abstellen auf dem Hof externe Kräfte auf den Schwenkarm und dessen Lagerung einwirken können. Es ist damit insbesondere auch sichergestellt, daß die in der Betriebsstellung einjustierte Schleuderscheibe stets diese Position beibehält und auch nach einer Abstreuprobe wieder in die gleiche Position gebracht wird, so daß der Aufgabepunkt des Düngers keine Änderung erfährt. Auf der anderen Seite wird die Düngerverteilung durch die Schleuderscheibe in keiner Weise beeinträchtigt, da der Schutzrahmen unterhalb der Schleuderscheibe liegt.

In weiterhin bevorzugter Ausführung ist vorgesehen, daß der Tragrahmen zwei senkrechte L-förmige Träger aufweist, deren jeweils untere horizontale Schenkel durch eine Quertraverse verbunden sind, und daß der Schutzrahmen von einem Teil des unteren Schenkels des L-förmigen Trägers, von einem äußeren Abschnitt der Quertraverse, einem Kragarm und einem diese beiden an ihren äußeren Enden verbindenen Rahmenschenkel gebildet ist.

Wie bereits angedeutet, weist der Tragrahmen von Anbaustreuern üblicherweise Standkufen auf. Der erfindungsgemäß ausgebildete Streuer zeichnet sich dadurch aus, daß die Unterkante der Standkufen des Rahmens und die Unterkante der die Schwenkarme untergreifenden Abweiserkufen etwa in der gleichen Ebene liegen.

Eine weiterhin vorteilhafte Ausgestaltung der Erfindung besteht darin, daß die Schleuderscheiben mittels Hydraulikmotoren, auf die sie unmittelbar aufgesetzt sind, unabhängig voneinander angetrieben sind.

Durch die Einzelantriebe jeder Schleuderscheibe läßt sich die Drehzahl der Schleuderscheiben unterschiedlich steuern, mit der Folge, daß die von den beiden Schleuderscheiben abgedeckte Streubreite verschieden sein kann. Dies ist insbesondere im Grenzbereich des zu bestreuenden Feldes, aber auch bei Feldern von Bedeutung, bei denen an eine ebene Fläche eine geneigte Fläche anschließt und die Arbeitsbreite am Übergang zur geneigten Fläche enden sollte. Dabei bereitet die Drehzahlsteuerung der beiden Schleuderscheiben aufgrund des hydraulischen Antriebs keinerlei Schwierigkeiten.

Es ist zwar bei Zweischeibenstreuern ohne Querförderung bekannt (DD 22 342 C, EP 0 125 740 A1), den Behälter vom Dreipunktgestänge aufzunehmen, doch weist dieser wegen der zwingend notwendigen trichterförmigen Ausbildung ein wesentlich geringeres Fassungsvermögen auf. Ebenso sind Zweischeibenstreuer bekannt (EP 0 125 740 A1, DE 3 310 694 A1), die für beide Schleuderscheiben einen einzigen hydraulischen Antrieb aufweisen, doch ist eine aufwendige, platzgreifende und gewichtserhöhende Getriebeverbindung zu den beiden Scheiben notwendig und eine getrennte Drehzahlsteuerung beider Scheiben nicht möglich. Bei Straßenstreuern zum Verteilen von Sand, Splitt oder Salz ist es bekannt (US 4 326 673 C und US 4 442 979 C), zwei oder mehr Schleuderscheiben sowie einen oder mehrere Querförderer getrennt hydraulisch anzutreiben. Hierbei stellen sich jedoch die Probleme, die sich bei Anbaugeräten für Schlepper ergeben, nicht, da als Zugmaschine ein Lastkraftwagen dient, der ein fast beliebig hohes Gewicht aufnehmen kann, ohne daß die Schwerpunktlage, die Fahr- und Lenkfähigkeit etc. beeinträchtigt werden.

In einer bevorzugten Ausführungsform ist vorgesehen, daß die Schleuderscheiben entgegen der Fahrtrichtung nach hinten schwenkbar und in der ausgeschwenkten Lage verriegelbar sind. Durch das Ausschwenken der Schleuderscheiben nach hinten, sind diese besonders gut zugänglich. Die Scheiben können leicht ausgewechselt werden, sei es zu Zwecken der Reparatur oder der Durchführung einer Dosierprobe zur Änderung der Streu-Charakteristik durch Montage anderer Schleuderscheiben, z.B. für das Grenzstreuen, zur Anpassung an wechselnde Düngersorten. Auch wird das Ausschwenken nach hinten nicht durch die Abweiserkufen behindert. Deren höchster Punkt muß nur einen gewissen, im übrigen aber minimalen Abstand von der tiefsten Stelle des Schwenkarms bzw. des Hydraulikmotors aufweisen.

Vorzugsweise ist jeder Schwenkarm an der Quertraverse lösbar angebracht, so daß die Streuaggregate im Bedarfsfall vom Rahmen getrennt werden können. Die Abweiserkufe ist am Tragrahmen oder am Schutzrahmen vorzugsweise so angebracht, daß sie auch den Hydraulikmotor untergreift, womit sie zugleich auch den Schwenkarm schützt.

Weiterhin ist von Vorteil, wenn die Unterkante des Schwenkarms zum äußeren Ende hin schräg nach oben gezogen ist und der Hydraulikmotor die schräg nach oben verlaufende Unterkante nach unten überragt. Hierdurch wird zunächst die Zugänglichkeit des Hydraulikmotors und seiner Anschlüsse von unten her verbessert, zum anderen ist aber der empfindliche und realtiv teure Hydraulikmotor mit den Anschlüssen durch die ihn untergreifende Abweiserkufe vor Beschädigungen gesichert.

Die Genauigkeit des Streuergebnisses wird unter anderem maßgeblich von dem Auftreffpunkt des Streugutes auf die Schleuderscheibe, dem sogenannten Aufgabepunkt beeinflußt. Es muß deshalb dieser Aufgabepunkt exakt und reproduzierbar eingehalten werden. Dies gelingt dadurch, daß an der Quertraverse je ein justierbarer Anschlag für die Einstellung der Betriebsstellung jeder Schleuderscheibe mit Bezug auf die Austragsöffnung des Behälters angeordnet ist.

Da die Tragrahmen mit der Quertraverse, die Abweiserkufen, der Behälter, die die Schleuderscheiben tragenden Schwenkarme und die Schleuderscheiben jeweils als getrennte Bauteile gefertigt und anschließend montiert werden, ergeben sich aufgrund üblicher Fertigungs- und Montagetoleranzen zwangsläufig Abweichungen in der Relativlage der Austrittsöffnung am Behälter zu der Schleuderschiebe und somit Abweichungen in der Lage des Aufgabepunktes des Streugutes auf der Schleuderscheibe. Durch Einjustieren des Anschlags in dem Herstellerbetrieb, läßt sich die Lage der Schleuderscheibe bezüglich der Austrittsöffnung am Behälter exakt einstellen und diese Lage wird auch nach längerer Betriebsdauer (häufiges Ein- und Ausschwenken der Schleuderscheiben) stets wieder exakt erreicht. Auch können eventuelle Toleranzen, die sich nach längerer Betriebsdauer ergeben (Vergrößerung von Lagerspielen etc.), jederzeit durch Nachjustieren des Anschlags ausgeglichen werden.

Zum Ein- oder Nachjustieren ist gemäß einer bevorzugten Ausführungsform vorgesehen, daß für die Einstellung der Betriebsstellung jeder Schleuderscheibe eine Lehre vorgesehen ist, die mit einem umrißgleichen Paßstück in die Austragsöffnung des Behälters oder eine ihr nahe andere vorgefertigte Ausnehmung einsetzbar ist und eine Anzeige für die Mittelpunktlage der Schleuderscheibe aufweist.

Mit einer solchen Lehre ist der Landwirt in der Lage, auf einfachste Weise die Schleuderscheiben in ihrer exakten Relativlage zur Austragsöffnung einzustellen bzw. den Anschlag nachzujustieren. Die Lehre kann unmittelbar die Mittelpunktlage der Schleuderscheibe anzeigen oder einen solchen Bezugspunkt, z. B. am Umfang der Scheibe, der indirekt die Mittelpunktlage gewährleistet. Gegebenenfalls kann die Anzeige auch aus einem Anschlag bestehen, gegen den die Scheibe mit dem Schwenkarm bewegt wird.

Gemäß einem weiteren Merkmal der Erfindung ist vorgesehen, daß für die Betriebsstellung jeder Schleuderscheibe ein im Schwenkbereich der Schwenkarme angeordneter Schalter vorgesehen ist, der beim Ausschwenken der Schleuderscheibe in deren unwirksame Lage deren Hydraulikmotor stillsetzt.

Damit ist gewährleistet, daß der Antrieb stillgesetzt wird, sobald der Schwenkarm mit der Schleuderscheibe, aus der Betriebsstellung herausgeschwenkt wird, und erst wieder eingeschaltet wird, wenn sich die Schleuderscheibe wieder in der Betriebsstellung befindet.

Eine vorteilhafte Ausführungsform besteht darin, daß die Quertraverse und der Schwenkarm als nach unten offenes U-Profil oder als Hohlprofil ausgebildet sind und daß der justierbare Anschlag und der Schalter in der Quertraverse bzw. in dem Schwenkarm angeordnet sind. Hiermit sind die empfindlichen Bauteile, Schalter und justierbarer Anschlag, gegen jegliche Schmutzeinwirkung geschützt.

Gemäß einem weiteren Merkmal der Erfindung ist vorgesehen, daß der Schwenkarm jeder Schleuderscheibe in deren Betriebsstellung mittels eines über den gesamten Justierweg des Anschlags wirksamen Spannverschlusses fixiert ist. Diese Ausbildung stellt sicher, daß der Schwenkarm in jeder Justierlage des Anschlags mittels des Spannverschlusses sicher und exakt fixiert ist.

Schließlich ist von Vorteil, wenn zumindest das Betätigungsglied des Spannverschlusses an der der Fahrtrichtung abgekehrten Rückseite der Quertraverse angeordnet ist.

Damit befindet sich das Betätigungsglied an der leichter zugänglichen Rückseite des Streuers, zu der hin auch die Schleuderscheiben ausgeschwenkt werden. Im übrigen ist es der Schmutzeinwirkung weitgehend entzogen.

Durch die vollständige oder zumindest teilweise hohle Ausbildung der Quertraverse ist es ferner möglich, innerhalb der Quertraverse die Anschlußleitungen für den Hydraulikmotor der Schleuderscheibe zu verlegen, so daß auch die Hydraulikleitungen gegen Beschädigung und Verschmutzung weitestgehend geschützt sind.

In bevorzugter Ausführung sind auch die Hydraulikmotoren für die Schleuderscheiben innerhalb des Schutzrahmens angeordnet.

Wenn weiterhin die Unterkante des Schutzrahmens tiefer liegt als der tiefste Punkt des Hydraulikmotors, ist ein besonders wirksamer Schutz desselben gegeben.

Gemäß einem weiteren Ausführungsbeispiel ist die Abweiserkufe am Tragrahmen oder am Schutzrahmen lösbar angebracht, vorzugsweise jedoch an einer in Fahrtrichtung liegenden Achse schwenkbar angeordnet und aus der Betiebsstellung in eine den Raum unterhalb der Auslauföffnung freigebende Stellung verschwenkbar.

Wenn die Abweiserkufe, wie erwünscht, den Hydraulikmotor und/oder den Schwenkarm wirksam schützen soll, weist sie naturgemäß eine gewisse flächige Ausdehnung auf. Wird dann die Schleuderscheibe weggeschwenkt, um beispielsweise eine Abstreuprobe vorzunehmen, so ist die Abweiserkufe im Weg. Sie behindert unter Umständen den im freien Fall austretenden Düngerstrahl, zumindest aber die Anordnung eines Auffanggefäßes unterhalb der Auslauföffnung. Um diese Abstreuprobe ungehindert durchführen zu können, wird die Abweiserkufe gelöst bzw. - wie vorzugsweise vorgesehen - verschwenkt. Um auf der anderen Seite das Schwenklager der Abweiserkufe beim Fahrbetrieb und beim Rangieren nicht zu beschädigen, weist die Schwenkachse etwa in Fahrtrichtung, so daß eventuell auf sie einwirkende Kräfte, die im wesentlichen unter flachem Neigungswinkel und im wesentlichen in senkrechter Ebene verlaufen, keinen Schaden anrichten können.

Mit Vorteil ist vorgesehen, daß die Abweiserkufe am Ende eines Hebels angeordnet ist, der an der etwa in Fahrtrichtung und mit Abstand von der Achse der Schleuderscheibe verlaufenden Schwenkachse gelagert ist, wobei vorzugsweise die Schwenkachse gegenüber der Achse der Schleuderscheibe nach innen versetzt ist. Die Abweiserkufe wird also aus der Schutzstellung nach innen verschwenkt, so daß die Schleuderscheibe und der Raum unterhalb derselben von der Seite und von hinten her zugänglich ist.

Eine weiterhin bevorzugte Ausführung zeichnet sich dadurch aus, daß der Hebel unter Wirkung einer am Trag- oder Schutzrahmen angehängten Feder steht und aus der stabilen Betriebsstellung über eine instabile Totpunktlage in die stabile andere Stellung gegen jeweils einen Anschlag schwenkbar ist.

Mit dieser Ausbildung wird die Abweiserkufe in der Betriebsstellung unter Wirkung der Federkraft gehalten, wobei sie gegen einen Anschlag laufen kann. Auf der anderen Seite läßt sich die Abweiserkufe problemlos gegen die Federkraft über die Totpunktlage hinweg in die andere Stellung verschwenken, in der dann eine Abstreuprobe oder aber Arbeiten an der Schleuderscheibe oder am Hydraulikmotor behinderungsfrei vorgenommen werden können.

Weiterhin ist von Vorteil, wenn die Abweiserkufe in der Betriebsstellung mit ihrer Unterkante etwa in Höhe der Unterkante des Schutzrahmens, vorzugsweise etwas oberhalb derselben liegt.

Durch die vorgenannte Ausführung ist gewährleistet, daß die Schutzfunktion in erster Linie von dem Schutzrahmen übernommen wird und die Abweiserkufe nur dann zur Wirkung kommt, wenn innerhalb der lichten Weite des Schutzrahmens Kräfte in Richtung auf den Schwenkarm bzw. den Hydraulikmotor wirksam werden könnten.

Mit Vorteil ist die Abweiserkufe von einem flachen, in der Betriebsstellung nach oben offenen U-Profil gebildet, das beispielsweise den nach unten ragenden Hydraulikmotor nicht unterseitig untergreift, sondern ihn auch seitlich schützt.

Da der Schwenkarm mit der Schleuderscheibe in der Betriebsstellung und nach Möglichkeit auch in der ausgeschwenkten Stellung positioniert werden müssen, ist bei der erfindungsgemäßen Ausbildung weiterhin vorgesehen, daß der Schwenkarm in der Betriebsstellung und in der die Auslauföffnung freigebenden Position der Schleuderscheibe an Anschlägen, die am Schutzrahmen angebracht sind, verriegelbar ist, wobei der Anschlag für die Betriebsstellung der Schleuderscheibe, wie bereits erläutert, justierbar ist.

Aufgrund der weit außen angeordneten Schleuderscheiben besteht weiterhin Bedarf an einem verbesserten Unfallschutz, der bei laufender Schleuderscheibe wirksam ist. Dieser wird dadurch erreicht, daß am Schwenkarm unmittelbar unterhalb der Schleuderscheibe ein zu dieser konzentrischer Schutzring und oberhalb der Schleuderscheibe ein weiterer konzentrischer Schutzring am Behälter oder am Tragrahmen angeordnet ist.

Die beiden Schutzringe befinden sich in der Betriebsstellung übereinander und lassen lediglich den für die Düngerverteilung notwendigen Raum in der Ebene der Schleuderscheibe frei. Durch den geringen Abstand der Schutzringe ist die Gefahr, daß eine Person in den Umlaufbereich der Scheibe gelangt, minimal. Dadurch, daß der untere Schutzring an dem Schwenkarm befestigt ist, wird er beim Verschwenken der Schleuderscheibe in die Freigabestellung mitbewegt, so daß auch er bei einer Abstreuprobe nicht stört.

Weitere Einzelheiten und Vorteile der Erfindung sind anhand von in der Zeichnung wiedergegebenen Ausführungsbeispielen beschrieben. In der Zeichnung zeigen:
- Figur 1: eine schematische Ansicht eines Schleuderstreuers auf die Vorderseite des Dünger-Behälters in einer ersten Ausführungsform;
- Figur 2: eine Draufsicht zu der Darstellung gemäß Figur 1;
- Figur 3: eine Seitenansicht zu der Darstellung gemäß Figur 1 in vergrößertem Maßstab;
- Figur 4: eine Seitenansicht des Schwenkarms für die Schleuderscheiben;
- Figur 5: eine Draufsicht zu der Darstellung gemäß Figur 4;
- Figur 6: eine Draufsicht auf eine andere Ausführungsform und
- Figur 7: eine der Figur 1 entsprechende Teilansicht dieser Ausführungsform.

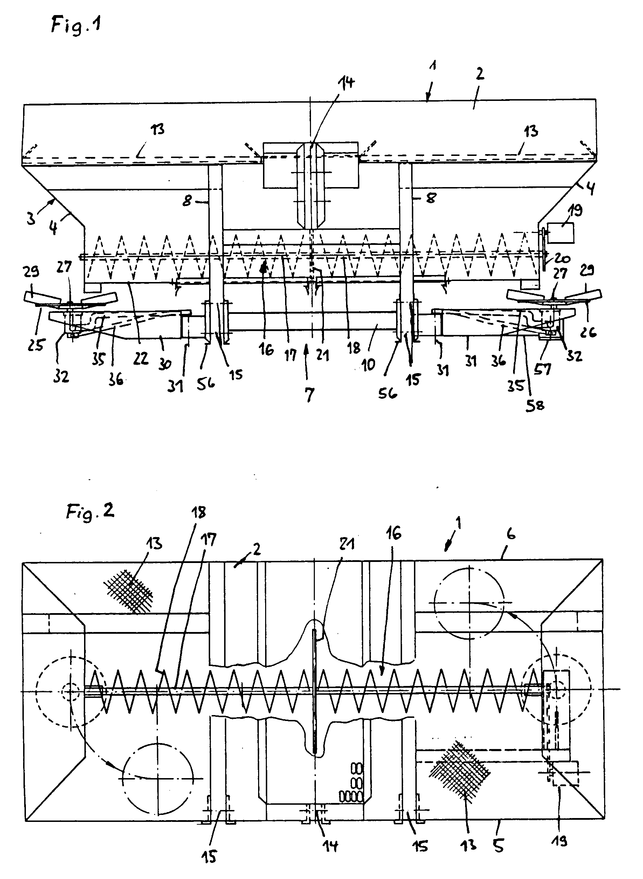

Der in der Zeichnung wiedergegebene Schleuderstreuer weist einen Behälter 1 auf, der sich mit seiner Längsachse quer zu der in Figur 2 mit Richtungspfeil wiedergegebenen Fahrtrichtung erstreckt und eine Breite aufweist, die der für den Straßentransport zulässigen Gesamtbreite entspricht.

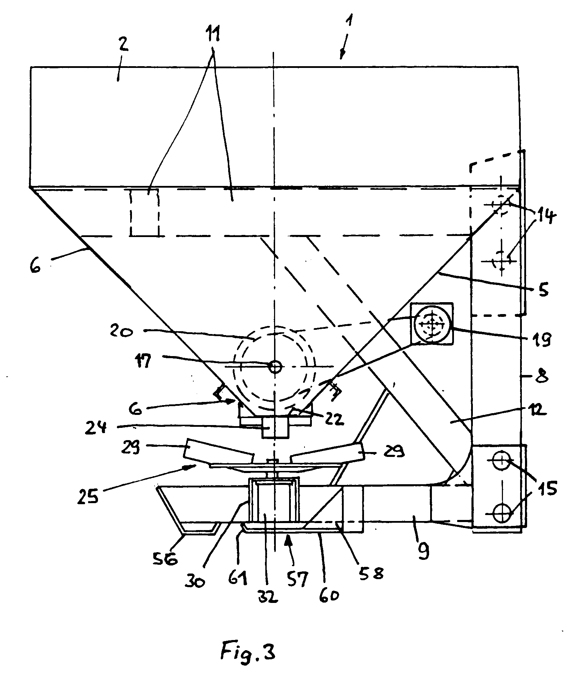

Er besteht aus einem im wesentlichen rechteckigen Oberteil 2 und einem Unterteil 3, dessen Seitenwände 4, Frontwand 5 und Rückwand 6 nach innen geneigt sind. Dabei laufen die Frontwand 5 und Rückwand 6 in einen muldenförmigen Boden (siehe Figur 3) ein. Auf die offene Stirnseite des rechteckigen Oberteils 2 können gegebenenfalls noch entsprechende Aufsätze aufgesetzt werden, um das Fassungsvermögen des Behälters 1 zu erhöhen.

Der Schleuderstreuer weist ferner einen Tragrahmen 7 auf, der im wesentlichen aus zwei senkrechten L-förmigen Trägern 8 (Figur 3) und einer deren untere Schenkel 9 verbindenden Quertraverse 10 besteht, wobei letztere die Schenkel 9 nach außen überragt. Die untere Quertraverse 10 ist an den Schenkeln 9 befestigt. Im Bereich des Winkels der L-förmigen Träger 8 sind ferner Winkelstützen 12 angebracht, die den Behälter 1 durchsetzen und mit einem innen liegenden Versteifungsprofil 11 verbunden sind. In das Oberteil 2 sind Siebrahmen 13 eingelegt und in der Mitte ein aussteifendes Lochblech eingesetzt.

Wie aus Figur 3 ersichtlich, sind die L-förmigen Träger 8 des Tragrahmens 7 innerhalb der vorderen Vertikalflucht des Behälters 1 angeordnet. Zu diesem Zweck kann der Behälter 1 im Bereich seines Oberteils 2 an der Frontwand 5 nach innen eingezogen sein. Im übrigen liegt der größere Teil der L-förmigen Träger 8 unterhalb der geneigten Frontwand 5 des Behälters 1. Auf diese Weise sitzen die Anschlußpunkte 14 für den Oberlenker und die Anschlußpunkte 15 für die Unterlenker nächstmöglich zur Mittellängsebene des Behälters, wodurch sich eine günstige Schwerpunktlage ergibt.

Innerhalb des Behälters 1 ist unmittelbar im muldenförmigen Boden ein Querförderer 16 angeordnet, der beim gezeigten Ausführungsbeispiel aus einer durchgehenden Welle 17 und einer mit Abstand von dieser getragenen Schraubenwendel 18 besteht. Der Querförderer 16 wird an einer Seite mittels eines Hydraulikmotors 19 über ein Kettenrad 20 angetrieben und ist in seinem mittleren Bereich bei 21 am Behälter abgestützt. Der muldenförmige Boden weist im Bereich seiner äußeren Enden ebene Abschnitte 22 (siehe Figur 3) auf, in denen die Austragsöffnungen 24 vorgesehen sind. Im Bereich dieser Austragsöffnungen 24 weist der Querförderer keine Förderorgane, sondern lediglich noch Umwälzorgane auf, die dafür sorgen, daß das oberhalb der Austragsöffnung liegende Gut nicht mehr nach außen gefördert, sondern nur noch umgewälzt wird.

Unterhalb der beiden außen liegenden Austragsöffnungen 24 ist je eine Schleuderscheibe 25, 26 angeordnet, deren Achse 27, 28 gegenüber der Austragsöffnung versetzt ist, so daß der die Austragsöffnung verlassende Dünger mit Abstand von der Achse auf die Schleuderscheiben 25, 26 trifft. Die Schleuderscheiben 25, 26 weisen in herkömmlicher Art mehrere Schleuderschaufeln 29 auf. Im übrigen sitzen die Schleuderscheiben 25, 26 an Schwenkarmen 30, die mit einer vertikalen Achse 31 an den äußeren Enden der unteren Quertraverse 10 gelagert sind. Bei dem Ausführungsbeispiel gemäß Figur 1 kann die eine Schleuderscheibe 25 in Fahrtrichtung 2 nach vorne, die andere Schleuderscheibe 26 entgegen der Fahrtrichtung nach hinten geschwenkt werden, vorzugsweise jedoch sind beide Schleuderscheiben nur nach hinten schwenkbar, wie in Figur 2 bei der rechts gezeigten Schleuderscheibe 25 angedeutet.

Die Schleuderscheiben 25, 26 sind mittels je eines Hydraulikmotors 32 angetrieben, die jeweils am äußeren Ende der Schwenkarme 30 angebracht sind. Beim Ausführungsbeispiel der Figur 1 sitzen die Schleuderscheiben unmittelbar auf der nach oben weisenden Abtriebswelle des Hydraulikmotors 32.

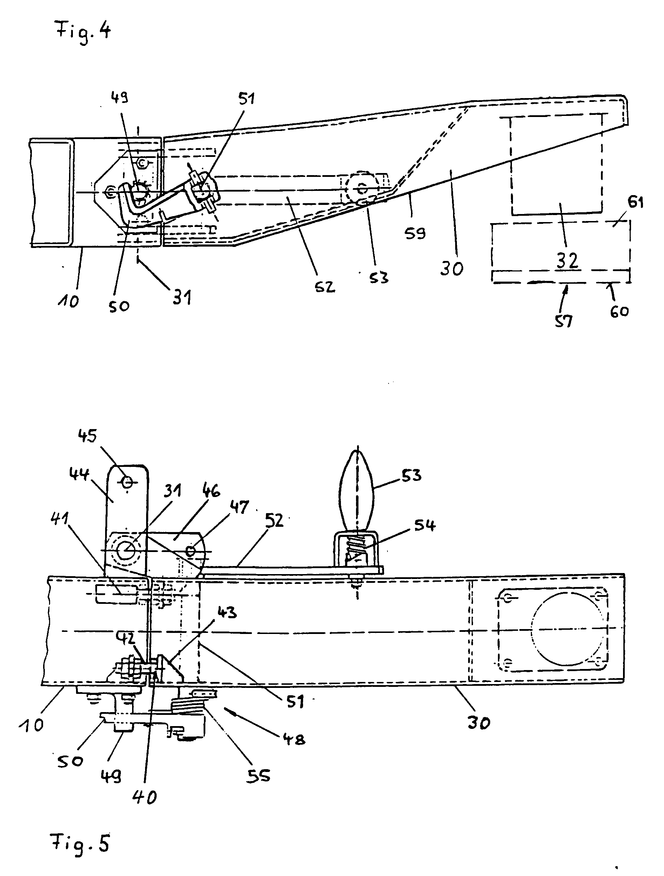

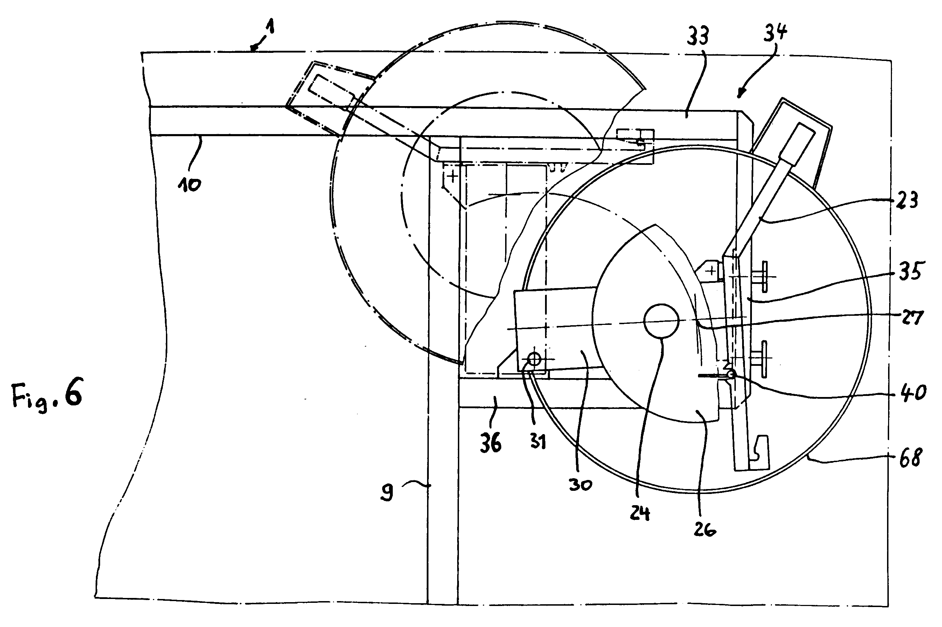

In Figur 4 und 5 ist das äußere Ende der unteren Quertraverse 10 erkennbar, an der der Schwenkarm 30 über die Achse 31 angelenkt ist. Ferner ist an der der Achse 31 gegenüberliegenden Seite ein Schalter 41 gezeigt, der im Hydraulikkreislauf des Hydraulikmotors 32 der Schleuderscheiben 25, 26 liegt. Der Schalter 41 sorgt dafür, daß beim Ausschwenken der Schleuderscheiben 25, 26 der Hydraulikzufluß zum Motor 32 unterbrochen wird, ein Ausschwenken des Schwenkarms 30 also nur bei stillstehender Schleuderscheibe möglich ist.

In Figur 5 ist ferner ein Anschlag 40 erkennbar, der wie der Schalter 41 innerhalb der aus einem Hohlprofil gebildeten Quertraverse 10 bzw. Schwenkarm 30 untergebracht ist. Der Anschlag 40 weist ein in der Quertraverse 10 befindliches verstellbares Teil 42, z. B. eine Stellschraube, und ein in dem Schwenkarm 30 angeordnetes Festteil 43 auf. Durch Verstellen des beweglichen Teils läßt sich der Schwenkarm 30 und damit die Schleuderscheibe auf die Austragsöffnung 24 (Figur 3) des Behälters 1 einjustieren, um den Auftreffpunkt des austretenden Düngers auf die Schleuderscheibe 25, 26 exakt und reproduzierbar einzustellen.

Diese Einstellung kann durch eine Lehre erleichtert werden, die mit einem umrißgleichen Paßstück in die Austragsöffnung 24 (siehe Figur 3) oder eine andere vorgegebene Öffnung eingesetzt wird und dann automatisch die Mittelpunktlage der Schleuderscheibe anzeigt oder durch einen Anschlag vorgibt.

Auf der Quertraverse 10 ist eine sich nach hinten erstrekkende Lasche 44 befestigt, die ein Loch 45 aufweist. Ebenso sitzt am Schwenkarm 30 eine Lasche 46 mit einem Loch 47. In der ausgeschwenkten Lage der Schleuderscheibe kommen die Löcher 45 und 47 zur Deckung. Durch einen Steckbolzen kann der Schwenkarm 30 und damit die Schleuderscheibe in der ausgeschwenkten Lage verriegelt werden.

Zum Verriegeln des Schwenkarms 30 in der Betriebsstellung der Schleuderscheibe ist ein Spannverschluß 48 vorgesehen, der im wesentlichen aus einem an der Quertraverse befestigten Bolzen 49 und einem Haken 50 besteht, der mit seiner inneren gekrümmten Hakenfläche den Bolzen 49 untergreift. Der Haken sitzt auf einem Zapfen 51 der den Schwenkarm 30 durchsetzt und an dem ein Betätigungshebel 52 mit Handhabe 53 angreift. Der Betätigungshebel ist mittels eines Rastzapfens 54 an dem Schwenkarm 30 verriegelbar. Der Haken 50 steht ferner unter Wirkung einer Schenkelfeder 55, die ihn in der Verriegelungsstellung fest auf den Bolzen 49 drückt. Wie Figur 5 zeigt, sitzt die Handhabe auf der Rückseite des Schwenkarms 30 bzw. der Quertraverse 10. Innerhalb der hohlen Quertraverse können ferner, wie Figur 1 zeigt, die hydraulischen Anschlußleitungen 35, 36 für die Hydraulikmotoren 32 verlegt sein.

Der Tragrahmen 17 bzw. die unteren Schenkel 9 der L-förmigen Träger 8 weisen an ihrem äußeren Ende Standkufen 56 auf, die den Streuer beim Absetzen bzw. beim Fahren in einer Tieflage gegen Beschädigung schützen. Ferner werden die Schwenkarme 30 an ihren Enden von Abweiserkufen 57 untergriffen, die jeweils an einem Kragarm 58 (Figur 3) sitzen, der seinerseits an den unteren Schenkeln 9 der L-förmigen Träger 8 befestigt ist. Der Kragarm 58 kann - in der Draufsicht - winkelförmig ausgebildet sein oder aber schräg von innen nach außen verlaufen.

Wenn die Unterkante 59 des Schwenkarms 30, wie vor allem aus Figur 4 erkennbar, schräg nach oben gezogen ist und der Hydraulikmotor 32 nach unten freiliegt, wird auch dieser durch die ihn untergreifende Abweiserkufe 57 wirksam geschützt. Die Abweiserkufe 57 weist zu diesem Zweck eine untere Standfläche 60 und eine nach hinten hochgezogene Anlauffläche 61 auf, deren höchster Punkt mit geringem Abstand unterhalb des tiefsten Punktes des Hydraulikmotors 32 liegt, um das Ausschwenken des Schwenkarms 30 nach hinten nicht zu behindern.

Bei der in Figur 6 gezeigten Ausführungsform ist die Schleuderscheibe 26 mit durchgezogenen Linien in der Betriebsstellung und mit strichpunktierten Linien in der ausgeschwenkten Stellung - ähnlich der Darstellung in Figur 2 - für die Vornahme einer Abstreuprobe gezeigt. Oberhalb der in Betriebsstellung befindlichen Schleuderscheibe 26 ist die Austragsöffnung 24 angedeutet, die versetzt neben der Drehachse 27 der Schleuderscheibe 26 ausmündet. An dem Schwenkarm 30 ist ein Stellhebel 23 gelagert, mittels dessen die Schleuderscheibe 26 aus der Betriebsstellung in die die Austragsöffnung 24 freigebende Stellung geschwenkt werden kann. In der in Figur 6 gezeigten Betriebsstellung ist der Schwenkarm 30 und somit die Schleuderscheibe 26 an dem justierbaren Anschlag 11 Verriegelt. Mit dem gleichen Stellhebel 23 kann die Schleuderscheibe in der ausgerückten Stellung gleichfalls an einem Anschlag verriegelt sein, wie dies mit strichpunktierten Linien angedeutet ist.

Figur 6 zeigt ferner die unteren Schenkel 9 der L-förmigen Träger 8 (Figur 3) des Tragrahmens, die an ihren hinteren freien Enden durch die Quertraverse 10 verbunden sind. Die Quertraverse 10 weist einen die unteren Schenkel 9 nach außen überragenden Abschnitt 33 auf, der einen Teil eines Schutzrahmens 34 bildet, welcher durch einen weiteren sich in Fahrtrichtung erstreckenden Schenkel 35 und einen zu dem Abschnitt 33 parallelen Schenkel 36 (ähnlich dem Kragarm der Vorgenannten Ausführungsform) sowie durch den unteren Schenkel 9 der L-förmigen Träger vervollständigt wird. Innerhalb des Schutzrahmens 34 ist der Schwenkarm 30 angeordnet und verschwenkbar. Zu diesem Zweck sitzt das senkrechte Schwenklager 31 an dem Schenkel 36 des Schutzrahmens 34.

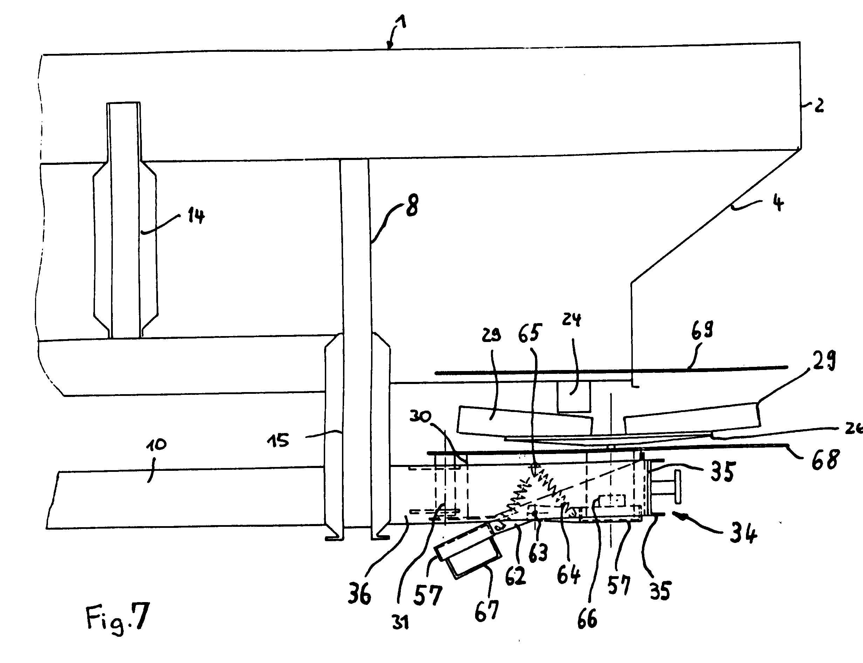

In Figur 7 ist der die Schleuderscheibe 26 antreibende Hydraulikmotor 32 erkennbar, auf dessen Abtriebswelle die Schleuderscheibe 26 aufgesetzt ist. Der Hydraulikmotor 32 und damit auch das äußere Ende des Schwenkarms 30 ist nach unten durch eine Abweiserkufe 57 geschützt, die von einem flachen U-Profil gebildet ist und die den Hydraulikmotor 32 nicht nur von unten, sondern auch von der Seite her untergreift. Die Abweiserkufe 57 sitzt an zwei parallelen Hebeln 62, die an einer etwa in Fahrtrichtung liegenden Achse 63 schwenkbar gelagert sind. Die Schwenkachse 63 wird beispielsweise von zwei Bolzen gebildet, von denen einer am äußeren Abschnitt 33 der Quertraverse 10, der andere an dem dazu parallelen Schenkel 35 des Schutzrahmens 34 (siehe Figur 6) angeordnet ist. An dem Hebel 62 greift eine Feder 64 an, die bei 65 am Schutzrahmen 34 angehängt ist, wobei sich der Anhängepunkt 65 etwa oberhalb der Schwenkachse 63 befindet. Auf diese Weise wird die Abweiserkufe 57 unter Wirkung der Feder 64 in der Funktionsstellung (Figur 7, rechts) gehalten, in der sie gegen einen Anschlag 66 am Schutzrahmen 34 anliegt. Um die Abweiserkufe aus dieser Stellung nach innen schwenken zu können, ist an ihrem Ende ein Handgriff 67 angebracht. Beim Verschwenken läuft die Feder 64 über die Schwenkachse 63 in die links wiedergegebene Lage, in der sie die Abweiserkufe 57 in ihrer verschwenkten Lage hält. In dieser Lage kann der Schwenkarm 30 mit der Schleuderscheibe 26 in die in Figur 6 strichpunktiert wiedergegebene Stellung geschwenkt werden, so daß der Raum unterhalb der Austragsöffnung 24 frei ist und der Düngerstrahl ungehindert nach unten austreten und ferner ein Auffanggefäß unterhalb der Austrägsöffnung 24 aufgestellt oder eingehängt werden kann.

Wie aus Figur 7 ersichtlich überragt der Hydraulikmotor 32 die Unterkante des Schutzrahmens 34 nach unten nicht. Die Abweiserkufe 57 liegt etwa in Höhe der Unterkante des Schutzrahmens 34 oder höher.

An dem Schwenkarm 30 ist ferner ein zur Schleuderscheibe 26 konzentrischer Schutzring 68 angebracht. Ein gleich großer Schutzring 69 in ebenfalls konzentrischer Anordnung zur Schleuderscheibe 26 ist unmittelbar oberhalb dieser am Behälter angebracht, so daß ein wirksamer Unfallschutz gegen Berühren der Schleuderscheibe 26 gebildet ist.

## Patentansprüche

1. Schleuderstreuer für Dünger zum Anbau an einen Schlepper mit einem Tragrahmen (7), einem von diesem aufgenommenen, quer zur Fahrtrichtung angeordneten Dünger-Behälter (1) mit je einer nahe dessen äußeren seitlichen Enden angeordneten Austragsöffnung und mit je einer unterhalb jeder Austragsöffnung angeordneten Schleuderscheibe (25,26), die am Ende eines Schwenkarms (30) mit vertikaler Schwenkachse angeordnet und in einer horizontalen Ebene aus einer Position unterhalb der Austragsöffnung in eine Position neben dieser schwenkbar ist, dadurch gekennzeichnet, daß der Tragrahmen (7) so ausgebildet ist, daß er mit dem Behälter (1) vom Dreipunktgestänge des Schleppers aufgenommen werden kann und daß jeder Schwenkarm (30) innerhalb eines im wesentlichen horizontalen Schutzrahmens (34) angeordnet ist, innerhalb dessen der Schwenkarm zwischen den beiden Positionen für die Schleuderscheibe (26) verschwenkbar ist und dessen Unterkante tiefer liegt als der tiefste Punkt des Schwenkarms, während die Schleuderscheibe in einer Ebene oberhalb des Schutzrahmens liegt, und daß jedem Schwenkarm (30) eine ihn wenigstens im Bereich seines äußeren Endes untergreifende Abweiserkufe (57) zugeordnet ist, die mit dem Tragrahmen (7) oder dem Schutzrahmen (34) verbunden ist.

2. Schleuderstreuer nach Anspruch 1, dadurch gekennzeichnet, daß der Tragrahmen (7) zwei senkrechte L-förmige Träger (8) aufweist, deren jeweils untere horizontale Schenkel durch eine Quertraverse (10) verbunden sind, und daß der Schutzrahmen (34) von einem Teil des unteren Schenkels (9) des L-förmigen Trägers, von einem äußeren Abschnitt (33) der Quertraverse (10), von einem Kragarm und einem diese beiden an ihren äußeren Enden verbindenden Rahmenschenkel (35) gebildet ist.

3. Schleuderstreuer nach Anspruch 1 oder 2 mit einem Tragrahmen, der an seiner tiefsten Stelle und im mittleren Bereich zwei mit Abstand voneinander angeordneten Standkufen aufweist, dadurch gekennzeichnet, daß die Unterkante der Standkufen (56) des Tragrahmens (7) und die Unterkante der die Schwenkarme (30) untergreifenden Abweiserkufen (57) etwa in der gleichen Ebene liegen.

4. Schleuderstreuer nach einem der Ansprüche 1 bis 3, dadurch gekennzeichnet, daß die Schleuderscheiben (25,26) mittels Hydraulikmotoren (32), auf die sie unmittelbar aufgesetzt sind, unabhängig voneinander angetrieben sind.

5. Schleuderstreuer nach einem der Ansprüche 1 bis 4, dadurch gekennzeichnet, daß die Schleuderscheiben (25,26) entgegen der Fahrtrichtung nach hinten schwenkbar und in der ausgeschwenkten Lage verriegelbar sind.

6. Schleuderstreuer nach einem der Ansprüche 1 bis 5, dadurch gekennzeichnet, daß jeder Schwenkarm (30) an der Quertraverse (10) lösbar angebracht ist.

7. Schleuderstreuer nach einem der Ansprüche 1 bis 6, dadurch gekennzeichnet, daß die Abweiserkufe (57) den Hydraulikmotor (32) untergreift.

8. Schleuderstreuer nach einem der Ansprüche 1 bis 7, dadurch gekennzeichnet, daß die Unterkante des Schwenkarms (30) zum äußeren Ende hin schräg nach oben gezogen ist und daß der Hydraulikmotor (32) die schräg nach oben verlaufende Unterkante nach unten überragt.

9. Schleuderstreuer nach einem der Ansprüche 1 bis 8, dadurch gekennzeichnet, daß an der Quertraverse (10) je ein justierbarer Anschlag (40) für die Einstellung der Betriebsstellung jeder Schleuderscheibe (25,26) mit Bezug auf die Austragsöffnung (24) des Behälters (1) angeordnet ist.

10. Schleuderstreuer nach einem der Ansprüche 1 bis 9, dadurch gekennzeichnet, daß für die Einstellung der Betriebsstellung jeder Schleuderscheibe (25,26) eine Lehre vorgesehen ist, die mit einem umrißgleichen Paßstück in die Austragsöffnung (24) des Behälters (1) oder eine ihr nahe andere vorgefertigte Ausnehmung einsetzbar ist und eine Anzeige für die Mittelpunktlage der Schleuderscheibe aufweist.

11. Schleuderstreuer nach einem der Ansprüche 1 bis 10, dadurch gekennzeichnet, daß für die Betriebsstellung jeder Schleuderscheibe (25,26) ein im Schwenkbereich der Schwenkarme (30) angeordneter Schalter (41) vorgesehen ist, der beim Ausschwenken der Schleuderscheibe in deren unwirksame Lage deren Hydraulikmotor (32) stillsetzt.

12. Schleuderstreuer nach einem der Ansprüche 1 bis 11, dadurch gekennzeichnet, daß die Quertraverse (10) und der Schwenkarm (30) als nach unten offenes U-Profil oder Hohlprofil ausgebildet sind und daß der justierbare Anschlag (40) und der Schalter (41) in der Quertraverse bzw. in dem Schwenkarm angeordnet sind.

13. Schleuderstreuer nach einem der Ansprüche 1 bis 12, dadurch gekennzeichnet, daß der Schwenkarm (30) jeder Schleuderscheibe (25,26) in deren Betriebsstellung mittels eines über den gesamten Justierweg des Anschlags (40) wirksamen Spannverschlusses (48) fixiert ist.

14. Schleuderstreuer nach einem der Ansprüche 1 bis 13, dadurch gekennzeichnet, daß zumindest das Betätigungsglied (53) des Spannverschlusses (48) an der der Fahrtrichtung abgekehrten Rückseite der Quertraverse (10) angeordnet ist.

15. Schleuderstreuer nach einem der Ansprüche 1 bis 14, dadurch gekennzeichnet, daß innerhalb der Quertraverse (10) die Anschlußleitungen für den Hydraulikmotor (32) der Schleuderscheibe verlegt sind.

16. Schleuderstreuer nach einem der Ansprüche 1 bis 15, dadurch gekennzeichnet, daß die Hydraulikmotoren (32) für die Schleuderscheiben (26) innerhalb des Schutzrahmens (34) angeordnet sind.

17. Schleuderstreuer nach einem der Ansprüche 1 bis 16, dadurch gekennzeichnet, daß die Unterkante des Schutzrahmens (34) tiefer liegt als der tiefste Punkt des Hydraulikmotors (32).

18. Schleuderstreuer nach einem der Ansprüche 1 bis 17, dadurch gekennzeichnet, daß die Abweiserkufe (57) am Tragrahmen (8,9,10) oder am Schutzrahmen (34) lösbar angebracht ist.

19. Schleuderstreuer nach einem der Ansprüche 1 bis 18, dadurch gekennzeichnet, daß die Abweiserkufe (57) am Tragrahmen (7) oder am Schutzrahmen (34) an einer etwa in Fahrtrichtung liegenden Achse (63) schwenkbar angeordnet und aus der Betriebsstellung in einen den Raum unterhalb der Auslauföffnung (24) freigebende Stellung verschwenkbar ist.

20. Schleuderstreuer nach einem der Ansprüche 1 bis 19, dadurch gekennzeichnet, daß die Abweiserkufe (57) am Ende eines Hebels (62) angeordnet ist, der an der etwa in Fahrtrichtung und mit Abstand von der Achse (27) der Schleuderscheibe (26) verlaufenden Schwenkachse (63) gelagert ist.

21. Schleuderstreuer nach einem der Ansprüche 1 bis 20, dadurch gekennzeichnet, daß die Schwenkachse (63) gegenüber der Achse (27) der Schleuderscheibe (26) nach innen versetzt ist.

22. Schleuderstreuer nach einem der Ansprüche 1 bis 21, dadurch gekennzeichnet, daß der Hebel (62) unter Wirkung einer am Trag- (8,9,10) oder Schutzrahmen (34) angehängten Feder (64) steht und aus der stabilen Betriebsstellung über eine instabile Totpunktlage in die stabile andere Stellung gegen jeweils einen Anschlag schwenkbar ist.

23. Schleuderstreuer nach einem der Ansprüche 1 bis 22, dadurch gekennzeichnet, daß die Abweiserkufe (57) in Höhe der Unterkante des Schutzrahmens (34), vorzugsweise etwas oberhalb derselben liegt.

24. Schleuderstreuer nach einem der Ansprüche 1 bis 23, dadurch gekennzeichnet, daß die Abweiserkufe (57) von einem flachen , in der Betriebsstellung nach oben offenen U-Profil gebildet ist.

25. Schleuderstreuer nach einem der Ansprüche 16 bis 24, dadurch gekennzeichnet, daß der Schwenkarm (30) in der Betriebsstellung und in der die Auslauföffnung (24) freigebenden Position der Schleuderscheibe (26) an Anschlägen (11), die am Schutzrahmen (34) angebracht sind, verriegelbar ist.

26. Schleuderstreuer nach Anspruch 25, dadurch gekennzeichnet, daß der Anschlag (11) für die Betriebsstellung der Schleuderscheibe (26) justierbar ist.

27. Schleuderstreuer nach einem der Ansprüche 1 bis 26, dadurch gekennzeichnet, daß am Schwenkarm (30) unmittelbar unterhalb der Schleuderscheibe (26) ein zu dieser konzentrischer Schutzring (68) und oberhalb der Schleuderscheibe (26) ein weiterer konzentrischer Schutzring (69) am Behälter (1) oder am Tragrahmen (8,9,10) angeordnet ist.

## Claims

1. Centrifugal broadcaster for fertilizer for mounting on a tractor with a support frame (7), a fertilizer container (1) received by the latter and positioned transversely to the direction of travel and having in each case a discharge opening positioned close to its outer lateral ends and with in each case one centrifugal disk (25,26) positioned below each discharge opening and located at the end of a swivel arm (30) with a vertical swivel axis and which can be swivelled in a horizontal plane from a position below the discharge opening into a position alongside the latter, characterized in that the support frame (7) is so constructed that together with the container (1) it can be received by the three-point linkage of the tractor and that each swivel arm (30) is located within a substantially horizontal protective frame (34), within which the swivel arm can be swivelled between the two positions for the centrifugal disk (27) and whose lower edge is lower than the lowest point of the swivel arm, whilst the centrifugal disk is located in a plane above the protective frame and that with each swivel arm (30) is associated a deflector member (57) engaging below it at least in the vicinity of its outer end and which is connected to the support frame (7) or to the protective frame (34).

2. Centrifugal broadcaster according to claim 1, characterized in that the support frame (7) has two vertical L-shaped supports (8), each of whose lower horizontal legs are connected by a crossbar (10) and that the protective frame (34) is formed by part of the lower leg (9) of the L-shaped support, an outer portion (33) of the crossbar (10), by a bracket and a frame leg (35) connecting the two together at their outer ends.

3. Centrifugal broadcaster according to claim 1 or 2 with a support frame, which at its lowest point and in the central area has two spaced stand members, characterized in that the lower edge of the stand members (56) of the support frame (7) and the lower edge of the deflector members (57) engaging below the swivel arms (30) are roughly in the same plane.

4. Centrifugal broadcaster according to one of the claims 1 to 3, characterized in that the centrifugal disks (25,26) are driven independently of one another by means of hydraulic motors (32) on which they are directly mounted.

5. Centrifugal broadcaster according to one of the claims 1 to 4, characterized in that the centrifugal disks (25,26) can be swivelled rearwards in opposition to the direction of travel and can be locked in the swivelled out position.

6. Centrifugal broadcaster according to one of the claims 1 to 5, characterized in that each swivel arm (30) is detachably fitted to the crossbar (10).

7. Centrifugal broadcaster according to one of the claims 1 to 6, characterized in that the deflector member (57) engages below the hydraulic motor (32).

8. Centrifugal broadcaster according to one of the claims 1 to 7, characterized in that the lower edge of the swivel arm (30) is drawn in upwardly sloping manner towards the outer end and that the hydraulic motor (32) projects downwards over the upwardly sloping lower edge.

9. Centrifugal broadcaster according to one of the claims 1 to 8, characterized in that on the crossbar (10) is located in each case one adjustable stop (40) for setting the operating position of each centrifugal disk (25,26) relative to the discharge opening (24) of the container (1).

10. Centrifugal broadcaster according to one of the claims 1 to 9, characterized in that for setting the operating position of each centrifugal disk (25,26) a template is provided, which can be inserted with an identical contour adjusting piece in the discharge opening (24) of the container (1) or another prefabricated recess close to it and has an indication of the centre-point position of the centrifugal disk.

11. Centrifugal broadcaster according to one of the claims 1 to 10, characterized in that for the operating position of each centrifugal disk (25,26) a switch (41) located in the swivelling area of the swivel arms (30) is provided and which on swivelling out the centrifugal disk stops its hydraulic motor (32) in its inoperative position.

12. Centrifugal broadcaster according to one of the claims 1 to 11, characterized in that the crossbar (10) and the swivel arm (30) are constructed as downwardly open U-profiles or hollow profiles and that the adjustable stop (40) and the switch (41) are located in the crossbar or swivel arm.

13. Centrifugal broadcaster according to one of the claims 1 to 12, characterized in that the swivel arm (30) of each centrifugal disk (25,26) is fixed in its operating position by means of a fixing closure (48) active over the entire adjustment path of the stop (40).

14. Centrifugal broadcaster according to one of the claims 1 to 13, characterized in that at least the operating member (53) of the fixing closure (48) is located on the back of the crossbar (10) remote from the travel direction.

15. Centrifugal broadcaster according to one of the claims 1 to 14, characterized in that the connecting lines for the hydraulic motor (32) of the centrifugal disk are located within the crossbar (10).

16. Centrifugal broadcaster according to one of the claims 1 to 15, characterized in that the hydraulic motors (32) for the centrifugal disks (26) are positioned within the protective frame (34).

17. Centrifugal broadcaster according to one of the claims 1 to 16, characterized in that the lower edge of the protective frame (30) is lower than the lowest point of the hydraulic motor (32).

18. Centrifugal broadcaster according to one of the claims 1 to 17, characterized in that the deflector member (57) is detachably fitted to the support frame (8,9,10) or to the protective frame (34).

19. Centrifugal broadcaster according to one of the claims 1 to 18, characterized in that the deflector member (56) on the support frame (7) or on the protective frame (34) is swivellably placed on a pin (63) directed roughly in the travel direction and can be swivelled out of the operating position into a position freeing the space below the discharge opening (24).

20. Centrifugal broadcaster according to one of the claims 1 to 19, characterized in that the deflector member (57) is located at the end of a lever (62), which is mounted on the swivel pin (63) located roughly in the travel direction and spaced from the spindle (27) of the centrifugal disk (26).

21. Centrifugal broadcaster according to one of the claims 1 to 20, characterized in that the swivel pin (63) is inwardly displaced with respect to the spindle (27) of the centrifugal disk (26).

22. Centrifugal broadcaster according to one of the claims 1 to 21, characterized in that the lever (62) is under the action of a spring (64) attached to the support frame (8,9,10) or the protective frame (34) and can be swivelled out of the stable operating position, via an unstable dead-centre position into the stable, other position in each case against a stop.

23. Centrifugal broadcaster according to one of the claims 1 to 22, characterized in that the deflector member (57) is positioned level with the lower edge of the protective frame (34) and preferably somewhat above the same.

24. Centrifugal broadcaster according to one of the claims 1 to 23, characterized in that the deflector member (57) is formed by a flat U-profile, which is upwardly open in the operating position.

25. Centrifugal broadcaster according to one of the claims 16 to 24, characterized in that the swivel arm (30) can be locked in the operating position and in the position of the centrifugal disk (26) freeing the discharge opening (24) on stops (11), which are fitted to the protective frame (34).

26. Centifugal broadcaster according to claim 25, characterized in that the stop (11) for the operating position of the centrifugal disk (26) is adjustable.

27. Centrifugal broadcaster according to one of the claims 1 to 26, characterized in that on the swivel arm (30) immediately below the centrifugal disk (26) is provided a protective ring (68) concentric thereto and above the centrifugal disk (26) there is a further concentric protective ring (69) on the container (1) or on the support frame (8,9,10).

## Revendications

1. Epandeur centrifuge pour engrais à monter sur un tracteur, comprenant un châssis porteur (7), un réservoir d'engrais (1) porté par ce châssis porteur (7) et disposé en travers de la direction de déplacement, présentant des ouvertures d'écoulement disposées respectivement au niveau de chacune de ses extrémités latérales extérieures, et des disques d'épandage (25,26) disposés respectivement en-dessous de chacune de ces ouvertures d'écoulement, chaque disque d'épandage (25,26) étant disposé à l'extrémité d'un bras pivotant (30) d'axe de pivotement vertical et étant mobile en pivotement dans un plan horizontal depuis une position en-dessous de l'ouverture d'écoulement jusqu'à une position à coté de celle-ci, caractérisé en ce que le châssis porteur (7) est conformé de façon à pouvoir, avec le réservoir (1), être porté par l'attelage à trois points du tracteur, et en ce que chaque bras pivotant (30) est disposé à l'intérieur d'un châssis de protection (34) pratiquement horizontal, à l'intérieur duquel le bras pivotant est mobile en pivotement entre les deux positions des disques d'épandage (26), et dont le bord inférieur est situé plus bas que le point le plus bas du bras pivotant, tandis que le disque d'épandage se situe dans un plan au-dessus du châssis de protection, et en ce que pour chaque bras pivotant (30) est prévu un patin déflecteur (57) l'entourant par le dessous au moins au niveau de son extrémité extérieure, ce patin déflecteur étant fixé au châssis porteur (7) ou au châssis de protection (34).

2. Epandeur selon la revendication 1, caractérisé en ce que le châssis porteur (7) présente deux supports (8) verticaux en forme de L, dont les branches horizontales inférieures sont reliées par une traverse (10), et en ce que le châssis de protection (34) est formé d'une partie de la branche inférieure (9) du support en forme de L, d'une section extérieure (33) de la traverse (10), d'un bras en porte-à-faux et d'un longeron (35) reliant les deux derniers au niveau de leurs extrémités extérieures.

3. Epandeur selon l'une des revendications 1 ou 2, comprenant un châssis porteur présentant à son point le plus bas, et dans sa partie centrale, deux patins d'appui disposés écartés l'un de l'autre, caractérisé en ce que le bord inférieur des patins d'appui (56) du châssis porteur (7) et le bord inférieur des patins déflecteurs (57) entourant les bras pivotants (30) se situent environ dans le même plan.

4. Epandeur selon l'une des revendications 1 à 3, caractérisé en ce que les disques d'épandage (25,26) sont actionnés de façon indépendante l'un de l'autre au moyen de moteurs hydrauliques (32) sur lesquels ils sont montés directement.

5. Epandeur selon l'une des revendications 1 à 4, caractérisé en ce que les disques d'épandage (25,26) sont mobiles en pivotement vers l'arrière en sens contraire du déplacement, et sont verrouillables en position pivotée latéralement.

6. Epandeur selon l'une des revendications 1 à 5, caractérisé en ce que chaque bras pivotant (30) est monté de façon amovible sur la traverse (10).

7. Epandeur selon l'une des revendications 1 à 6, caractérisé en ce que le patin déflecteur (57) entoure par le dessous le moteur hydraulique (32).

8. Epandeur selon l'une des revendications 1 à 7, caractérisé en ce que le bord inférieur du bras pivotant (30) s'oriente en oblique vers le haut à son extrémité extérieure, et en ce que le moteur hydraulique (32) dépasse en-dessous de ce bord inférieur orienté en oblique vers le haut.

9. Epandeur selon l'une des revendications 1 à 8, caractérisé en ce qu'une butée (40) réglable est disposée sur la traverse (10) pour le réglage de la position de fonctionnement de chacun des disques d'épandage (25,26) en fonction de l'ouverture d'écoulement (24) du réservoir (1).

10. Epandeur selon l'une des revendications 1 à 9, caractérisé en ce qu'un gabarit est prévu pour le réglage de la position de fonctionnement de chaque disque d'épandage (25,26), ce gabarit mettant en oeuvre un élément de même forme dans l'ouverture d'écoulement (24) du réservoir (1) ou dans un autre retrait prévu à proximité de celle-ci, et fournissant une indication pour la position centrale du disque d'épandage.

11. Epandeur selon l'une des revendications 1 à 10, caractérisé en ce qu'un interrupteur (41) est prévu au niveau de la trajectoire du bras pivotant (30) pour la position de fonctionnement de chaque disque d'épandage (25,26), cet interrupteur éteignant leur moteur hydraulique (32) lors du pivotement des disques d'épandage dans leur position de repos.

12. Epandeur selon l'une des revendications 1 à 11, caractérisé en ce que la traverse (10) et le bras pivotant (30) sont conformés en profilés de section en U ouvert vers le bas ou en profilés tubulaires, et en ce que la butée réglable (40) et l'interrupteur (41) sont disposés, soit dans la traverse, soit dans le bras pivotant.

13. Epandeur selon l'une des revendications 1 à 12, caractérisé en ce que le bras pivotant (30) de chaque disque d'épandage (25,26), dans leur position de fonctionnement, est fixé par une fermeture à genouillère (48) agissant sur l'ensemble du domaine de réglage de la butée (40).

14. Epandeur selon l'une des revendications 1 à 13, caractérisé en ce qu'au moins l'élément agissant (53) de la fermeture à genouillère (48) est disposé sur la face arrière de la traverse (10) opposée au sens du déplacement.

15. Epandeur selon l'une des revendications 1 à 14, caractérisé en ce que les conduits d'alimentation pour le moteur hydraulique (32) des disques d'épandage sont dissimulés à l'intérieur de la traverse (10).

16. Epandeur selon l'une des revendications 1 à 15, caractérisé en ce que les moteurs hydrauliques (32) des disques d'épandage (26) sont disposés à l'intérieur des châssis de protection (34).

17. Epandeur selon l'une des revendications 1 à 16, caractérisé en ce que le bord inférieur du châssis de protection (34) est disposé plus bas que le point le plus bas du moteur hydraulique (32).

18. Epandeur selon l'une des revendications 1 à 17, caractérisé en ce que le patin d'appui (57) est monté de manière amovible sur le châssis porteur (8,9,10) ou sur le châssis de protection (34).

19. Epandeur selon l'une des revendications 1 à 18, caractérisé en ce que le patin d'appui (57) est monté à pivotement sur le châssis porteur (7) ou sur le châssis de protection (34) sur un axe s'étendant approximativement dans le sens du déplacement, et peut pivoter depuis la position de fonctionnement jusqu'à une position libérant l'espace en-dessous de l'ouverture d'écoulement (24).

20. Epandeur selon l'une des revendications 1 à 19, caractérisé en ce que le patin d'appui (57) est disposé à l'extrémité d'un levier (62) qui est monté à pivotement sur un axe (63) s'étendant approximativement dans le sens du déplacement, mais écarté de l'axe (27) du disque d'épandage (26).

21. Epandeur selon l'une des revendications 1 à 20, caractérisé en ce que l'axe de pivotement (63) est décalé vers l'intérieur par rapport à l'axe (27) du disque d'épandage (26).

22. Epandeur selon l'une des revendications 1 à 21, caractérisé en ce que le levier (62) est soumis à l'action d'un ressort (64) accroché au châssis porteur (8,9,10) ou au châssis de protection (34), et est mobile en pivotement depuis la position stable de fonctionnement, en passant par un point mort instable, jusqu'à l'autre position stable, chacune contre une butée.

23. Epandeur selon l'une des revendications 1 à 22, caractérisé en ce que le patin d'appui (57) se situe à la hauteur du bord inférieur du châssis de protection (34), de préférence un peu au-dessus.

24. Epandeur selon l'une des revendications 1 à 23, caractérisé en ce que le patin d'appui (57) est formé d'un profilé plat de section en U ouvert vers le haut en position de fonctionnement.

25. Epandeur selon l'une des revendications 16 à 24, caractérisé en ce que le bras pivotant (30) est verrouillable, dans la position de fonctionnement et dans la position des disques d'épandage (26) libérant les ouvertures d'écoulement, contre des butées (11) montées sur le châssis de protection (34).

26. Epandeur selon la revendication 25, caractérisé en ce que la butée (11) est réglable pour la position de fonctionnement du disque d'épandage (26).

27. Epandeur selon l'une des revendications 1 à 26, caractérisé en ce qu'un anneau de protection (68) est disposé sur le bras pivotant (30) directement endessous du disque d'épandage (26) en position concentrique, et un autre anneau de protection (69) concentrique est disposé sur le réservoir (1) ou le châssis porteur (8,9,10) au-dessus du disque d'épandage (26).
